# EUROPÄISCHE PATENTSCHRIFT

(11) **EP 1 831 585 B1**
(45) Veröffentlichungstag und Bekanntmachung des Hinweises auf die Patenterteilung: **20.08.2008**
(21) Anmeldenummer: 05815916.1
(22) Anmeldetag: 07.12.2005
(51) Int. Cl.: F16F 15/134

(54) **DREHSCHWINGUNGSDÄMPFER**
TORSIONAL VIBRATION DAMPER
AMORTISSEUR DE VIBRATIONS TORSIONNELLES

(30) Priorität: 22.12.2004 DE 102004062983
(43) Veröffentlichungstag der Anmeldung: 12.09.2007
(73) Patentinhaber: LuK Lamellen und Kupplungsbau Beteiligungs KG, 77815 Bühl (DE)
(72) Erfinder: ZHOU, Bin, 77815 Bühl (DE); JÄCKEL, Johann, 77830 Bühlertal (DE)
(86) Internationale Anmeldenummer: PCT/DE2005/002202
(87) Internationale Veröffentlichungsnummer: WO 2006/066539

(56) Entgegenhaltungen:
- EP-A- 0 472 950

## Beschreibung

Die Erfindung betrifft Drehschwingungsdämpfer, insbesondere zur Verwendung im Antriebsstrang eines Kraftfahrzeuges. Die Erfindung betrifft insbesondere Drehschwingungsdämpfer mit wenigstens einem ersten Teil und einem gegenüber diesem entgegen der Wirkung von zumindest einem sich tangential oder in Umfangsrichtung erstreckenden Energiespeicher verdrehbaren zweiten Teil, wobei die beiden Teile wenigstens eine Aufnahme für die Energiespeicher definieren und jeweils Beaufschlagungsbereiche besitzen, zwischen denen der wenigstens eine Energiespeicher bei einer Relativverdrehung der beiden Teile komprimierbar ist, wobei weiterhin der Energiespeicher - über seine Längserstreckung betrachtet - mittels zumindest zwischen seinen beiden Enden vorgesehenen Abstützelementen fliehkraftmäßig abgestützt ist.

Derartige Drehschwingungsdämpfer in Form von so genannten Zweimassenschwungrädern sind beispielsweise durch die DE 102 41 879 A1, die DE 102 09 838 A1 die EP0 472950A2 vorgeschlagen worden.

Der vorliegenden Erfindung lag die Aufgabe zugrunde, Drehschwingungsdämpfer der vorerwähnten Art bezüglich deren Dämpfungseigenschaften zu verbessern. Durch die erfindungsgemäßen Ausgestaltungsmerkmale eines Drehschwingungsdärüpfers soll auch gewährleistet werden, dass dieser in einfacher Weise herstellbar und montierbar ist. Insbesondere soll durch Optimierung der radialen Abstützung von Energiespeichern eine Reduzierung der infolge dieser radialen Abstützung beim Komprimieren und Entspannen der Energiespeicher bzw. Federn erzeugten Reibarbeit gewährleistet werden. Diese Reibarbeit ist parallel zu den Energiespeichern wirksam und widersetzt sich einer elastischen Verformung derselben. Die erfindungsgemäßen Ausgestaltungsmerkmale sollen weiterhin gewährleisten, dass die infolge der vorerwähnten radialen Abstützung von den Energiespeichern parallel geschaltete Reibung herangezogen werden kann, um eine Entspannung des Energiespeichers zu bewirken.

Die der Erfindung zugrunde liegenden Aufgaben werden bei einem Drehschwingungsdämpfer der eingangs beschriebenen Art zumindest teilweise dadurch erzielt, dass die fliehkraftmäßige Abstützung der Energiespeicher mittels der Abstützelemente sowohl am ersten als auch am zweiten Teil erfolgt. Die erfindungsgemäße Abstützung kann insbesondere bei langen Energiespeichern Verwendung finden. Ein solcher Energiespeicher kann beispielsweise aus einer einstückigen, langen Schraubenfeder, die gegebenenfalls vorgebogen sein kann, gebildet sein oder aus einer Vielzahl von hintereinander angeordneten, kürzeren Schraubenfedern bestehen. Bei Verwendung von kurzen Schraubenfedern zur Bildung eines langen Energiespeichers können die einzelnen Federn durch Abstandsteile voneinander getrennt sein. Die Abstandsteile können beispielsweise einen keilartigen Bereich besitzen, der zwischen zwei Federenden eingreift. Diese Abstandsteile können gleichzeitig radial außen Anformungen besitzen, die zur radialen Abstützung der Federenden dienen. Derartige Abstandsteile bilden also gleichzeitig Abstützelemente zur fliehkraftmäßigen Abstützung des durch die einzelnen Federn gebildeten langen Energiespeichers.

Die erfindungsgemäße Lösung bietet den Vorteil, dass die durch die Abstützelemente im Zugbetrieb erzeugte Gesamtreibungsarbeit bis zu 50 % reduziert werden kann. Ein weiterer Vorteil liegt darin, dass bei der Entlastung des Energiespeichers dieser zwangsweise zumindest über Teillängen seiner Gesamterstreckung entspannt werden kann durch die von den Abstützelementen, welche sich an verschiedenen Teilen abstützen, erzeugte Reibung.

Die insgesamt durch die Abstützelemente erzeugte dynamische Reibungsarbeit kann durch entsprechende Abstimmung der in Umfangsrichtung aufeinander folgenden Abstützelemente, welche sich am ersten Teil und am zweiten Teil abstützen, beeinflusst werden. Besonders vorteilhaft kann es sein, wenn die zwei Gruppen von Abstützelementen bildenden Abstützelemente derart angeordnet werden, dass einem Abstützelement der ersten Gruppe, welches sich an dem einen Teil abstützt, ein Abstützelement der zweiten Gruppe, welches sich an dem anderen Teil abstützt, folgt. Dies entspricht einer 1/1-Anordnung. Es können jedoch auch mehrere Abstützelemente der einen Gruppe mit einem oder mehreren Abstützelementen der anderen Gruppe alternierend angeordnet werden. So kann beispielsweise eine 2/2-Anordnung oder eine 2/1-Anordnung oder eine 3/2-Anordnung oder umgekehrte Anordnungen zweckmäßig sein. Auch kann es vorteilhaft sein, die kompletten beiden Gruppen von Abstützelementen unmittelbar hintereinander anzuordnen. Bei der letztgenannten Anordnung der Abstützelemente fängt die Kompression bzw. der Momentenaufbau innerhalb des Energiespeichers zuerst in der Mitte an. Dies bewirkt, dass mit der gleichen Kraft die Bogenfeder gleichzeitig, ausgehend von deren Mitte, in beide Umfangsrichtungen betätigt bzw. komprimiert wird. Es wird praktisch die Feder in zwei Teilbereiche unterteilt, welche in Reihe geschaltet sind.

Besonders zweckmäßig kann es sein, wenn wenigstens zwei - über die Längserstreckung des Energiespeichers bzw. der Schraubenfeder betrachtet - voneinander beabstandete Abstützelemente vorhanden sind, von denen sich das eine nur an dem einen Teil und das andere nur an dem anderen Teil radial abstützt.

Wie bereits erwähnt, kann der Energiespeicher zumindest durch eine längliche Schraubenfeder gebildet sein, wobei diese zweckmäßigerweise ein Längen-/Außendurchmesser-Verhältnis besitzt, das wenigstens 6 beträgt.

Die Abstützelemente können derart ausgebildet sein, dass sie lediglich einen radial äußeren Bereich einer Federwindung abstützen. Die Abstützung zwischen einem Abstützelement und der zugeordneten, wenigstens einen Windung kann dabei gleichzeitig einen Formschluss bilden, der gewährleistet, dass das Abstützelement zumindest in Umfangsrichtung eine Antriebsverbindung mit der zugeordneten Federwindung aufweist.

In vorteilhafter Weise kann der wenigstens eine Energiespeicher in einer Aufnahme geführt sein, die von Bereichen beider Teile gebildet ist, wobei beide Teile jeweils zumindest einen sich wenigstens über einen Teilbereich der Längserstreckung des Energiespeichers in Umfangsrichtung erstreckenden Wandungsbereich aufweisen können, der axial zumindest Bereiche eines Abstützelementes übergreift, wobei der Energiespeicher radial nach außen hin über Abstützelemente abstützbar ist, die beim Komprimieren des Energiespeichers jeweils entlang wenigstens eines der Wandungsbereiche verlagerbar sind. Die Abstützelemente können als Gleitschuhe und/oder als Rollschuhe ausgebildet sein, wie dies zum Beispiel durch den eingangs genannten Stand der Technik vorgeschlagen wurde.

Bei Verwendung einer über die Längserstreckung des Energiespeichers verteilten Mehrzahl von Abstützelementen kann es zweckmäßig sein, wenn diese sich alternierend am ersten Teil und am zweiten Teil abstützen. Es kann jedoch auch vorteilhaft sein, wenn die Mehrzahl von Abstützelementen sich jeweils gruppenweise alternierend am ersten und am zweiten Teil abstützen.

Für die Ausgestaltung des Drehschwingungsdämpfers und die Abstützung der Abstützelemente kann es vorteilhaft sein, wenn der wenigstens eine Energiespeicher in einer bogenförmig verlaufenden Aufnahme geführt ist, die zumindest radial nach außen hin von sich in Umfangsrichtung erstreckenden Wandungsbereichen sowohl des ersten Teils als auch des zweiten Teils begrenzt ist.

Weitere Vorteile, konstruktive Merkmale und funktionelle Eigenschaften von erfindungsgemäß ausgebildeten Drehschwingungsdämpfern ergeben sich aus der nachfolgenden Beschreibung, in der, unter Bezugnahme auf Zeichnungen, verschiedene Ausführungsbeispiele beschrieben sind.

Es zeigen:

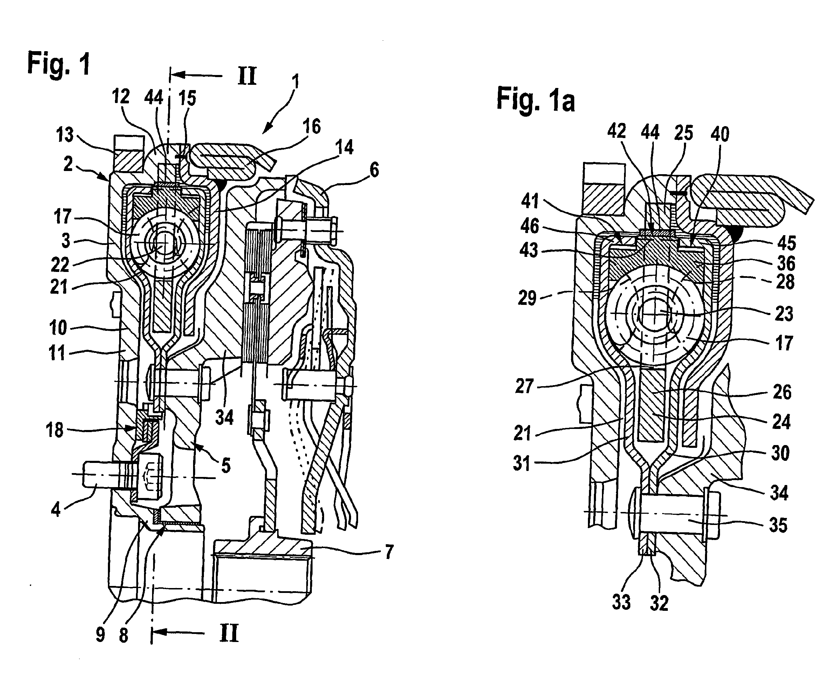

- Figur 1: einen Halbschnitt durch einen erfindungsgemäß ausgestalteten Drehschwingungsdämpfer,
- Figur 1 a: eine vergrößerte Darstellung des oberen Bereiches der Figur 1,
- Figur 2: eine Schnittansicht gemäß der Linie II-II der Figur 1,
- Figuren 3 und 4: jeweils eine konstruktive Ausführungsvariante, bei der die Erfindung realisiert ist und die
- Figuren 5 und 6: weitere mögliche Anordnungen von Abstützelementen zur fliehkraftmäßigen Abstützung von Energiespeichern.

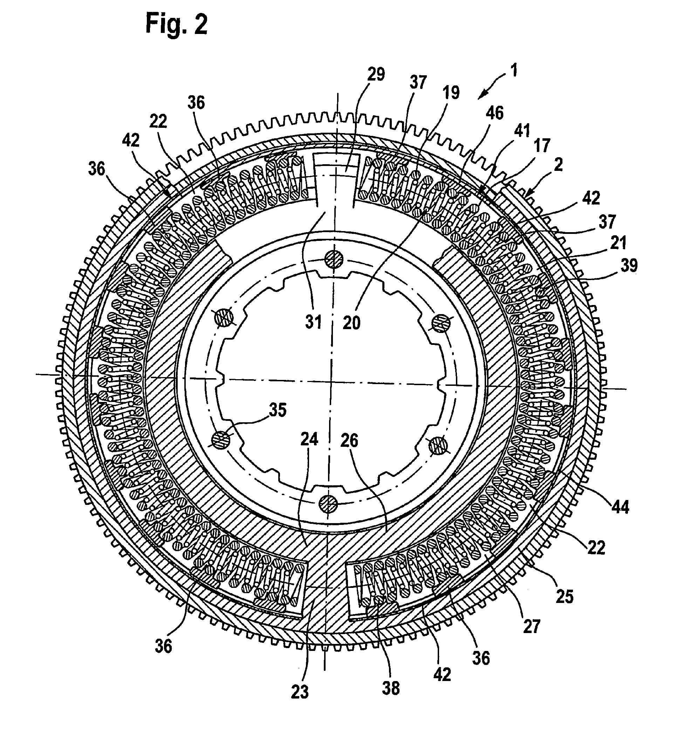

Der in den Figuren 1 und 2 dargestellte Drehschwingungsdämpfer 1 ist Bestandteil eines so genannten Zweimassenschwungrades 2. Das Eingangsteil des Drehschwingungsdämpfers 1 bildet eine Primärmasse 3, die über Schraubverbindungen 4 mit der Abtriebswelle eines nicht näher dargestellten Motors verbindbar ist. Das Ausgangsteil des Drehschwingungsdämpfers 1 ist hier durch eine Sekundärmasse 5 gebildet, welche bei dem dargestellten Ausführungsbeispiel mittels einer Reibungskupplung 6 und einer Kupplungsscheibe 7 mit einer nicht näher dargestellten Getriebewelle verbindbar ist. Die Reibungskupplung 6 ist fest mit der Sekundärmasse 5 verbunden.

Das Eingangsteil (Primärmasse) 3 und das Ausgangsteil (Sekundärmasse) 5 des Drehschwingungsdämpfers 1 bzw. des Zweimassenschwungrades 2 sind über eine Lagerung 8 konzentrisch zueinander und verdrehbar gelagert. Die Lagerung 8 ist hier durch eine Gleitlagerung gebildet, die sowohl eine radiale als auch zumindest in eine Axialrichtung eine axiale Positionierung der beiden Massen 3 und 5 gewährleistet. Die Lagerung 8 ist von einem axialen Ansatz 9 der Primärmasse 3 getragen. Bei dem dargestellten Ausführungsbeispiel ist dieser axiale Ansatz 9 einstückig ausgebildet mit einem Blechformteil 10, das einen radial nach außen verlaufenden, ringförmigen Bereich 11 besitzt, der radial außen in einen sich axial in Richtung der Kupplung 6 erstreckenden, ringförmigen Ansatz 12 übergeht. Wie aus Figur 1 ersichtlich ist, besitzt der ringförmige Ansatz 12 eine Abstufung, die einen Sitz bildet, auf dem ein Anlasserzahnkranz 13 aufgenommen ist. Aus Figur 1 ist erkennbar, dass das Bauteil 10, welches dem Antriebsmotor benachbart ist, ein wesentliches Bauteil des Eingangsteils bzw. der Primärmasse 3 bildet.

An dem freien Ende des axialen ringförmigen Ansatzes 12 ist eine sich radial nach innen hin erstreckende Wandung 14 befestigt, welche hier ebenfalls durch ein Blechformteil gebildet ist. Die radial äußeren Bereiche der Wandung 14 und des Bauteiles 10 sind miteinander verbunden, und zwar vorzugsweise über eine sich über den Umfang erstreckende Verschweißung 15, wie beispielsweise Laserstrahlschweißung. An den radial äußeren Bereichen der Wandung 14 ist eine ringförmige Zusatzträgheitsmasse 16 befestigt, welche aus gefaltetem Blechmaterial besteht.

Die beiden Teile bzw. Schwungmassen 3, 5 des Drehschwingungsdämpfers 1 sind entgegen der Wirkung von Energiespeichern 17 sowie zumindest einer Hystereseeinrichtung bzw. Reibeinrichtung 18 zueinander verdrehbar.

Wie insbesondere aus Figur 2 ersichtlich ist, bestehen die Energiespeicher 17 aus einer äußeren Schraubenfeder 19 und einer darin aufgenommenen, inneren Schraubenfeder 20. Es sind hier zwei Energiespeicher 17 vorgesehen, die sich jeweils in Umfangsrichtung über ca. 170° erstrecken. Zumindest die äußere Schraubenfeder 19 besitzt ein Längen/Außendurchmesser-Verhältnis das größer ist als 6. Die Energiespeicher 17 können auch lediglich aus einer Schraubenfeder 19 bestehen. Auch sind Ausführungsformen denkbar, bei denen innerhalb einer Schraubenfeder 19 unterschiedliche Innenfedern, die in Reihe angeordnet sind, aufgenommen sind.

Wie aus Figur 1 ersichtlich ist, sind hier die Energiespeicher 17 innerhalb einer zumindest radial nach außen hin dichten, ringförmigen Kammer 21 aufgenommen. Die Kammer 21 wird begrenzt durch die der Sekundärmasse 5 benachbarte Wandung 14 und durch das hier als Blechformteil 10 ausgebildete Bauteil 10. Die ringförmige Kammer 21 bildet segmentartige Kanäle 22, in denen die hier durch Schraubenfedern gebildete Energiespeicher 17 aufgenommen sind. Die Energiespeicher 17 sind vorzugsweise durch wenigstens eine vorgekrümmte Schraubenfeder 19 gebildet.

Wie aus der Vergrößerung gemäß Figur 1a in Verbindung mit Figur 2 erkennbar ist, sind bei dem dargestellten Ausführungsbeispiel die Abstütz- bzw. Beaufschlagungsbereiche 23 des Eingangsteiles bzw. der Primärmasse 3 durch ein flanschartiges Bauteil 24 gebildet, das sich hier in etwa in der axialen Mitte der ringförmigen Kammer 21 radial erstreckt. Die Abstütz- bzw. Beaufschlagungsbereiche 23 sind durch radial verlaufende Ausleger gebildet, die radial außen in einen ringförmigen Bereich 25 übergehen, der sich in Umfangsrichtung entlang der Energiespeicher 17 erstreckt. Bei dem dargestellten Ausführungsbeispiel besitzt das flanschartige Bauteil 24 auch einen ringförmigen inneren Bereich 26, der zur Stabilität bzw. Steifigkeit des flanschartigen Bauteils 24 beiträgt. Aufgrund dieser Ausgestaltung bildet das flanschartige Bauteil 24, wie insbesondere aus Figur 2 erkennbar, in Umfangsrichtung gebogene Fenster 27, in denen die in Umfangsrichtung bogenförmig verlaufenden Energiespeicher 17 aufgenommen sind. Die am Ausgangsteil bzw. der Sekundärmasse 5 vorgesehenen Abstütz- bzw. Beaufschlagungsbereiche 28, 29 für die Energiespeicher 17 sind von zwei hier aus Blech geformten Teilen 30, 31 getragen. Die beiden Blechformteile 30, 31 umgreifen die Energiespeicher 17 und sind radial innen axial aufeinander zu getellert. Die aneinander liegenden, radial inneren Bereiche 32, 33 der Teile 30, 31 sind mit der ringförmigen Masse 34 fest verbunden, und zwar hier über Nietverbindungen 35.

Wie aus Figur 1 ersichtlich ist, bildet die ringförmige Masse 34 eine Reibfläche für einen Reibbelag der Kupplungsscheibe 7.

Die Beaufschlagungsbereiche 28, 29 sind hier durch axiale Anformungen bzw. Taschen 28, 29 gebildet, welche in die Blechformteile 30, 31 eingebracht sind und axial zwischen die Endbereiche der Energiespeicher 17 eingreifen.

Zumindest bei Rotieren der Einrichtung 1 werden die Energiespeicher 17 bzw. die Schraubenfedern 19, 20 radial nach außen gedrängt, weshalb sie entsprechend abgestützt werden müssen.

Die Abstützung der Energiespeicher 17 erfolgt, wie insbesondere aus Figur 2 ersichtlich ist, über eine Vielzahl von Abstützelementen 36, 37, die über die umfangsmäßige Längserstreckung des Energiespeichers 17 verteilt sind. Die Abstützelemente 36, 37 sind bei dem dargestellten Ausführungsbeispiel durch Gleitschuhe gebildet, deren Wirkungsweise und Funktion im Folgenden noch näher erläutert wird.

Die Abstützelemente bzw. Gleitschuhe 36, 37 stützen jeweils zumindest eine Federwindung 38, 39 ab. Die Abstützelemente 36, 37 sind dabei in Bezug auf die abzustützenden Federwindungen derart ausgestaltet, dass sie einen Formschluss mit der zugeordneten, wenigstens einen Federwindung besitzen, wodurch gewährleistet wird, dass eine Positionierung bzw. Festlegung des entsprechenden Gleitschuhes zumindest in Längsrichtung, und, falls notwendig, auch in radialer Richtung der Feder 19 gewährleistet ist. Bezüglich der möglichen Ausgestaltung eines derartigen Formschlusses wird ausdrücklich auf die DE 102 09 838 A1 verwiesen.

Radial nach außen hin werden die Gleitschuhe bzw. Abstützelemente 36, 37 über sich in Umfangsrichtung erstreckende Flächen 40, 41 und 42 abgestützt, welche von Bauteilen des Drehschwingungsdämpfers 1 getragen bzw. gebildet sind.

Wie insbesondere aus Figur 2 erkennbar ist, sind zwei Arten von Abstützelementen bzw. Gleitschuhen 36 und 37 vorgesehen, denen auch unterschiedliche Abstützflächen, nämlich 40, 41 für die Abstützelemente 37 und 42 für die Abstützelemente 36, zugeordnet sind.

In Figur 1a ist ein Abstützelement 36 dargestellt, das die Schraubenfeder 17 radial außen teilweise umgreift und sich mit einem mittleren, radial hervorstehenden Bereich 43 an der vom Eingangsteil bzw. der Primärmasse 3 getragenen Abstützfläche 42 radial abstützt. Die Abstützfläche 42 ist bei dem dargestellten Ausführungsbeispiel nicht unmittelbar durch das flanschartige Bauteil 24 gebildet, sondern durch ein gehärtetes Blechband 44, das jeweils radial innerhalb des ringförmigen Bereiches 25 in den Fenstern 27 aufgenommen ist. Beim Spannen und Entspannen des Energiespeichers 17 werden die durch Gleitschuhe gebildeten Abstützelemente entlang der Fläche 42 verschoben.

Wie insbesondere aus Figur 1a erkennbar ist, sind die Abstützflächen 40, 41 für die Abstützelemente 37 durch ringförmige axiale Vorsprünge 45, 46 der Blechformteile 30, 31 gebildet. Der ringförmige axiale Vorsprung 46 ist auch in Figur 2 erkennbar.

Aus Figur 1a ist auch ersichtlich, dass der Gleitschuh 36 derart ausgebildet ist, dass zwischen diesem und den Flächen 40, 41 ein Luftspalt verbleibt. Letzteres ist auch aus dem oberen linken Bereich der Figur 2 erkennbar.

Aus Figur 2 ist ersichtlich, dass die Gleitschuhe 36 im Querschnitt derart ausgebildet sind, dass sie sich an den Flächen 40, 41 radial abstützen können, gegenüber der Fläche 42 jedoch zumindest einen geringen Abstand aufweisen. Dies ist aus dem oberen rechten Viertel der Figur 2 erkennbar.

Die erfindungsgemäße Aufteilung in zwei Gleitbahnanordnungen 40, 41 bzw. 42, welche einerseits dem Eingangsteil bzw. der Primärmasse 3 und andererseits dem Ausgangsteil bzw. der Sekundärmasse 5 zugeordnet sind, ermöglicht den Einsatz von zwei unterschiedlichen Gleitschuhsätzen, die jeweils einer Gleitbahnordnung zugeordnet sind.

Die einzelnen Gleitschuhe 36 bzw. 37 der Gleitschuhsätze können dabei, wie in Figur 2 dargestellt, gruppenweise abwechselnd hintereinander angeordnet werden. Bei dem dargestellten Ausführungsbeispiel sind einem Energiespeicher 17 bzw. der äußeren Schraubenfeder 19 zehn Gleitschuhe zugeordnet, die in zwei Gruppen von je fünf Gleitschuhen unterteilt sind, wobei die Gleitschuhe einer Gruppe jeweils unmittelbar hintereinander angeordnet sind. Die Reihenfolge der Anordnung der zu den wenigstens zwei Gleitschuhgruppen gehörenden Gleitschuhe bzw. Abstützelemente 36, 37 kann jedoch beliebig erfolgen. So kann beispielsweise, über die Länge eines Energiespeichers 17 betrachtet, abwechseln ein Gleitschuh 36, dann ein Gleitschuh 37, dann wieder ein Gleitschuh 36 usw. vorgesehen werden. Es handelt sich dann also um eine 1/1-Anordnung. Es kann jedoch, wie bereits erwähnt, eine beliebige Anordnung erfolgen, zum Beispiel 2/1 oder 3/2 oder 3/1 oder 2/2 oder 3/3 usw.

Die erfindungsgemäße Lösung der Gleitbahnanordnungen hat unter anderem den Vorteil, dass die infolge der auf den Energiespeicher 17 einwirkenden Fliehkraft erzeugten Abstützkräfte, welche über die Abstützelemente 36, 37 abgefangen werden müssen, zumindest insgesamt betrachtet eine geringere Reibung, welche sich einer Komprimierung bzw. Entspannung des Energiespeichers 17 widersetzt, erzeugen. Dies ist unter anderem darauf zurückzuführen, dass zumindest diejenigen Federwindungen, die sich zwischen zwei aufeinander folgenden Abstützelementen 36 und 37 befinden, beim Zusammen- und Auseinanderschieben dieser Abstützelemente 36, 37 praktisch reibungsfrei komprimiert und entspannt werden können. Ein weiterer Vorteil ist darin zu sehen, dass bei einer Relativverdrehung zwischen den beiden Teilen bzw. Massen 3 und 5 in Entspannungsrichtung der Energiespeicher 17, diese Energiespeicher zumindest über Teilbereiche ihrer Längsausdehnung zwangsweise infolge der in unterschiedlichen Drehrichtungen wirksamen Reibeingriffe der Abstützelemente 36 und 37 längs gestreckt, also in Entspannungsrichtung gezogen werden. Bei einer 1/1 Hintereinanderanordnung von Abstützelementen bzw. Gleitschuhen 36, 37 kann ein Energiespeicher 17 bzw. eine Schraubenfeder 19 über praktisch den gesamten Arbeitsweg entspannt werden.

Bei einer Anordnung der Gleitschuhe 36, 37 gemäß Figur 2 wird bei einer Relativverdrehung zwischen den beiden Schwungmassen 3, 5 der Energiespeicher 17 derart komprimiert, dass dieser zunächst hauptsächlich im mittleren Bereich, in dem der Übergang von den Gleitschuhen 36 zu den Gleitschuhen 37 vorhanden ist, komprimiert wird. Dies ist, wie bereits erwähnt, darauf zurückzuführen, dass an dieser Stelle die durch die Gleitschuhe 36, 37 erzeugte Reibung, welche der Feder bzw. den Federwindungen parallel geschaltet ist, am geringsten ist.

Wie bereits erwähnt, besitzt die in den Figuren 1, 1 a und 2 beschriebene Ausführungsform eines Drehschwingungsdämpfers eine ringförmige Kammer 21, in der die zum Filtrieren von Schwingungen erforderlichen Mittel, wie insbesondere die Energiespeicher 17, aufgenommen sind. Zumindest zur Verschleißreduzierung kann in einer derartigen Kammer 21 ein Schmiermittel aufgenommen sein.

Die erfindungsgemäße radiale Abstützung der Energiespeicher 17 mittels zumindest zwei Arten von Abstützelementen 36, 37, in Verbindung mit wenigstens zwei Gleitbahnanordnungen, ermöglicht die auftretende Reibung zwischen den Abstützelementen und den Gleitbahnanordnungen derart zu bemessen, dass auch trockene Drehschwingungsdämpfer die erforderliche Lebensdauer erreichen.

Die erfindungsgemäße Aufteilung der den verschiedenen Abstützelementen zugeordneten Gleitbahnen (bzw. Gleitflächen) sowie die Zuordnung zu den Gleitbahnen von wenigstens zwei verschiedenen Gruppen von Gleitelementen können auch in vorteilhafter Weise bei Energiespeichern verwendet werden, die aus einer Mehrzahl von hintereinander angeordneten Einzelfederelementen bestehen, die über zwischengelegte Elemente in Reihe geschaltet sind, welche gleichzeitig die Enden der Federelemente radial abstützen. Derartige Energiespeicher sind beispielsweise durch die DE 198 10 500 C2, die DE 197 33 334 A1 und die DE 44 44 196 C2 bekannt geworden. Bei Verwendung von an den Enden eines Energiespeichers angreifenden Beaufschlagungsschuhen, die gleichzeitig zur radialen Abstützung des entsprechenden Endes dienen, können sich diese Schuhe ebenfalls an unterschiedlichen Gleit- bzw. Abstützflächen abstützen.

Die erfindungsgemäße Ausgestaltung kann auch in vorteilhafter Weise in Verbindung mit Abstützelementen, die sich unter Zwischenlegung wenigstens eines Wälzkörpers an einem Wandungsbereich abstützen, Anwendung finden. Derartige rollschuhähnlich wirkende Abstützelemente sind beispielsweise durch die DE 102 41 879 A1 bekannt geworden.

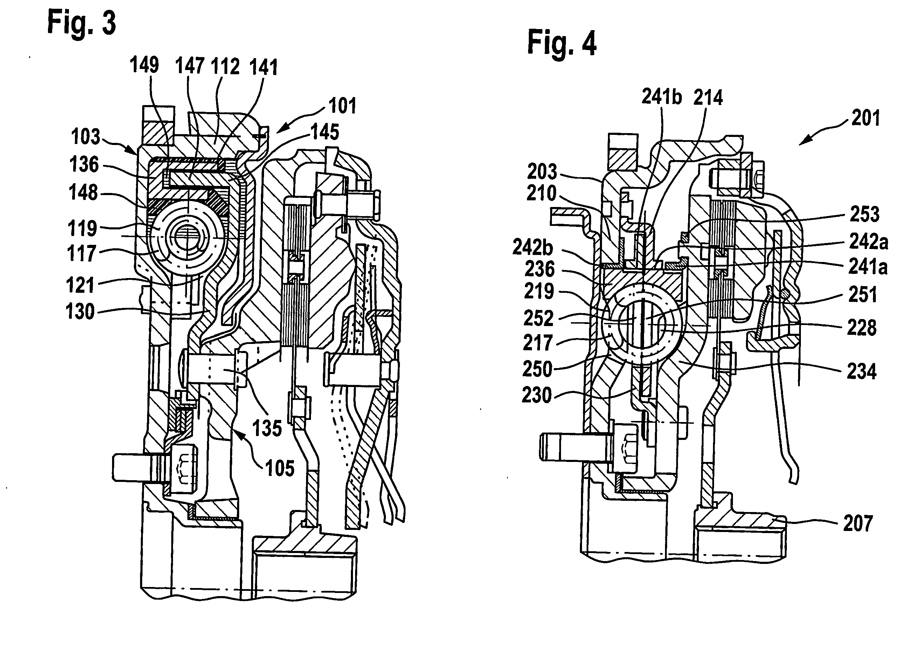

Die in Figur 3 dargestellte Ausführungsform eines Drehschwingungsdämpfers 101 besitzt funktionell einen ähnlichen Aufbau wie der Drehschwingungsdämpfer 1, welcher in Zusammenhang mit den Figuren 1, 1a und 2 beschrieben wurde. Konstruktive Unterschiede bestehen hauptsächlich in der Abstützungsart der Energiespeicher 117. Der hier ebenfalls durch wenigstens eine Schraubenfeder 119 gebildet ist. In ähnlicher Weise, wie dies in Zusammenhang mit den vorangegangenen Figuren beschrieben wurde, ist auch die Schraubenfeder 119 über wenigstens zwei an verschiedenen Abstütz- bzw. Gleitflächen abgestützten Elementen in radialer Richtung gegen Fliehkrafteinwirkung zurückgehalten. In Figur 3 ist ein Abstützelement 136 in Form eines Gleitschuhes dargestellt, der zu der ersten Gruppe von Abstützelementen gehört. Der Gleitschuh 148 ist ihn ähnlicher Weise, wie dies in Zusammenhang mit den vorangegangenen Figuren beschrieben wurde, zumindest mit einer Federwindung in Kontakt. Bei dem dargestellten Ausführungsbeispiel ist der Gleitschuh 136 durch ein im Querschnitt U-förmig ausgestaltetes Verstärkungsbauteil 147 gebildet, welches von einem Kunststoffmaterial 148 ummantelt ist.

Die durch die Gleitschuhe 148 gebildete Gruppe von Abstützelementen ist entlang einer Fläche 141 gleitbar, die von einem axialen Ansatz 112 des Eingangsteils bzw. der Primärmasse 103 des Drehschwingungsdämpfers 101 getragen wird. Die Fläche 141 kann dabei unmittelbar durch den axialen Ansatz 112 gebildet sein oder aber durch eine Zwischenlage, wie dies in Zusammenhang mit dem Bauteil 44 beschrieben wurde. Vorzugsweise besitzt die entsprechende Abstütz- bzw. Gleitfläche 141 eine höhere Härte zur Vermeidung bzw. Verringerung des Verschleißes.

An dem Ausgangsteil bzw. der Sekundärmasse 105 ist ein flansch- bzw. scheibenförmiges Bauteil 130 befestigt, und zwar hier über Nietverbindungen 135. Das scheibenartige Bauteil 130 bildet bzw. trägt radial außen einen ringförmigen axialen Ansatz 145, der hier die Schraubenfeder 119 radial außen axial übergreift und dabei gleichzeitig in den Schlitz 149 der im Querschnitt axial U-förmig ausgebildeten Gleitschuhe 136 eingreift. An diesem axialen Ansatz 145 können sich die Gleitschuhe der zweiten Gruppe von Abstützelementen für die Schraubenfeder 119 radial abstützen. Diese Gleitschuhe der zweiten Gruppe von Abstützelementen sind bezüglich zumindest ihrer Funktion vergleichbar mit den in Zusammenhang mit den Figuren 1, 1a und 2 beschriebenen Gleitschuhen 37.

Wie aus Figur 3 ersichtlich ist, besitzt auch der Drehschwingungsdämpfer 101 eine ringförmige Kammer 121, die zumindest im radial äußeren Bereich mit einem Schmiermittel versehen sein kann.

Bei der in Figur 4 dargestellten Ausführungsform eines Drehschwingungsdämpfers 201 sind die sich in Umfangsrichtung erstreckenden Energiespeicher 217 in fensterförmigen Aufnahmen 250, 251 zweier scheibenförmiger Bauteile 210, 214 aufgenommen. Die in Umfangsrichtung die Aufnahmen 250 und 251 begrenzenden Bereiche der Bauteile 210 und 214 bilden die Abstütz- bzw. Beaufschlagungsbereiche für die Schraubenfedern 219.

Das Ausgangsteil bzw. die Sekundärmasse 234 trägt ebenfalls Abstütz- bzw. Beaufschlagungsbereiche für die Energiespeicher 217. Diese Abstütz- bzw. Beaufschlagungsbereiche sind von einem scheibenförmigen Bauteil 230 und einem flansch- bzw. scheibenförmigen Bauteil 234 getragen. Das flanschförmige Bauteil 234 ist bezüglich seiner Funktion vergleichbar mit der ringförmigen Masse 34 gemäß Figur 1 und bildet eine Reibfläche für den Reibbelag einer Kupplungsscheibe 207. Dieses Bauteil 234 ist als Blechformteil ausgebildet.

Wie aus Figur 4 ersichtlich, besitzt das scheibenförmige Bauteil 230 fensterförmige Aufnahmen 252 für den Energiespeicher 217 bzw. die wenigstens eine Schraubenfeder 219. Die Abstütz- bzw. Beaufschlagungsbereiche des flanschartigen Bauteiles 234 für die Energiespeicher 217 sind durch Anprägungen bzw. Vorsprünge des flanschartigen Bauteiles 234 gebildet, welche jeweils an dem zugeordneten Ende eines Energiespeichers 217 zur Anlage kommen. Wie aus Figur 4 ersichtlich ist, sind die scheibenförmigen Bauteile 214 und 230 axial benachbart, wobei sich das scheibenförmige Bauteil 230 radial in den zwischen den beiden scheibenförmigen Bauteilen 210 und 214 vorhandenen, axialen Freiraum hinein erstreckt.

In ähnlicher Weise, wie dies in Zusammenhang mit den vorangegangenen Figuren bereits beschrieben wurde, ist auch der Energiespeicher 217 über wenigstens zwei Gruppen von Abstützelementen, die sich an verschiedenen Abstütz- bzw. Gleitflächen abstützen, radial geführt. In Figur 4 ist wiederum ein Gleitschuh 236 der ersten Gruppe von Abstützelementen dargestellt. Wie aus Figur 4 zu entnehmen ist, ist die Gesamtgleitfläche für den Gleitschuh 236 durch zwei Teilgleitflächen 242a und 242b gebildet, welche radial außen die fensterförmigen Aufnahmen 250 und 251 begrenzen. Die Teilgleitfläche 242a ist durch einen bogenförmigen, axialen Ansatz des scheibenförmigen Bauteiles 214 gebildet. Bei dem hier dargestellten Ausführungsbeispiel ist die Teilgleitfläche 242b durch eine im Querschnitt L-förmige, in Umfangsrichtung bogenartig ausgebildete Einlage 244, die in die fensterförmige Aufnahme 250 axial eingreift, gebildet. Die Gleitschuhe, welche zu der zweiten Gruppe von Abstützelementen gehören, die bezüglich ihrer Funktion vergleichbar sind mit den Gleitschuhen 37, werden ebenfalls über zwei Teilgleitflächen 241a, 241 b radial abgestützt. Die beiden Teilgleittlächen 241 a und 241 b sind von den Bauteilen 234 und 230 getragen. Die Teilgleitfläche 241 b ist in ähnlicher Weise dem Bauteil 230 angeformt, wie die Teilgleitfläche 242a dem scheibenförmigen Bauteil 214. Die Teilgleitfläche 241a ist bei dem hier dargestellten Ausführungsbeispiel durch zumindest ein separates Bauteil 253 gebildet, das im Querschnitt L-förmig, in Umfangsrichtung jedoch zumindest bogenförmig verläuft und mit dem flanschartigen Bauteil 234 fest verbunden ist.

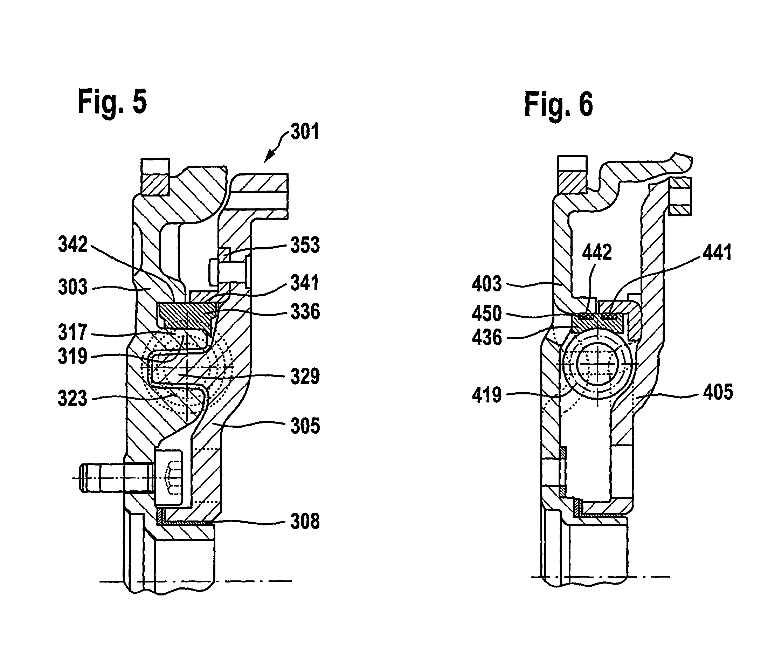

Der in Figur 5 teilweise dargestellte Drehschwingungsdämpfer 301 besitzt ein Primärteil 303 und ein Sekundärteil 305, die entgegen der Wirkung wenigstens eines sich tangential bzw. in Umfangsrichtung erstreckenden Energiespeichers 317 verdrehbar sind. Bei dem dargestellten Ausführungsbeispiel bilden die Teile 303 und 305 die Primärmasse und die Sekundärmasse eines so genannten Zweimassenschwungrades. Die Primärmasse 303 und die Sekundärmasse 305 sind hier über eine Gleitlagerung 308 verdrehbar gelagert. Der auch hier durch wenigstens eine Schraubenfeder 319 gebildete Energiespeicher 317 wird zumindest über eine Teillänge seiner umfangsmäßigen Erstreckung mittels Abstützelementen, die hier ebenfalls als Gleitschuhe 336 ausgebildet sind, fliehkraftmäßig abgestützt. Die Feder 317 ist in ähnlicher Weise wie dies mit den vorangegangenen Figuren beschrieben wurde, mit dem dargestellten Gleitschuh 336 zumindest über eine Windung in Umfangsrichtung antriebsmäßig gekoppelt. Wie aus Figur 5 erkennbar ist, sind die umfangsmäßigen Beaufschlagungsbereiche 323 und 329 einteilig mit den hier als Gussbauteile ausgebildeten Schwungradelementen 303 und 305. Es ist erkennbar, dass die Schraubenfeder 319 in axiale Einbuchtungen der beiden Schwungradelemente 303 und 305 aufgenommen und geführt ist. Die hier jeweils durch eine axiale Nase gebildeten Beaufschlagungsbereiche 329 erstrecken sich in den durch die U-förmige Ausgestaltung der Beaufschlagungsbereiche 323 gebildeten Freiraum, so dass sich die Beaufschlagungsbereiche 323 und 329 in axialer Richtung überschneiden.

Wie aus Figur 5 ersichtlich ist, stützt sich hier der dargestellte Gleitschuh 336 in radialer Richtung an zwei relativ zueinander verdrehbaren Abstütz- bzw. Gleitflächen 341 und 342 ab. Die Abstützfläche 341 ist dabei durch ein im Querschnitt winkelförmiges, in Umfangsrichtung zumindest sektorförmig ausgebildetes Bauteil 353 gebildet, das hier über Nietverbindungen fest mit dem Bauteil 305 verbunden ist. Eine derartige Bauweise ermöglicht eine thermische Entkoppelung der Abstützfläche 341 gegenüber dem Bauteil 305, welches gleichzeitig die Reibfläche für den Reibbelag einer Kupplungsscheibe bildet, und zwar in ähnlicher Form, wie dies in Zusammenhang mit den Figuren 1, 1a und 2 beschrieben wurde.

Die Abstütz- bzw. Gleitfläche 342 ist hier unmittelbar dem Bauteil 303 angeformt. In ähnlicher Weise, wie dies jedoch in Zusammenhang mit den vorangegangenen Figuren bereits beschrieben wurde, könnte die Abstütz- bzw. Gleitfläche 342 durch eine sich in Umfangsrichtung erstreckende Zwischenlage, zum Beispiel aus gehärtetem Stahl, gebildet sein. Es wird diesbezüglich auf das Bauteil 242b gemäß Figur 4 oder 44 gemäß Figur 2 hingewiesen.

Die in Figur 6 teilweise dargestellte Konstruktion unterscheidet sich gegenüber der in Figur 5 im Wesentlichen dadurch, dass das Primärteil 403 und das Sekundärteil 405 als Blechkonstruktion ausgeführt sind. Die entsprechenden Beaufschlagungsbereiche für die Feder 419 sind, wie aus der Figur entnehmbar, durch Anprägungen der Bauteile 403 und 405 gebildet. Die Gleitflächen 441, 442 für die Gleitschuhe 436 sind ähnlich angeordnet wie die Gleitflächen 341 und 342 gemäß Figur 5.

Aus Figur 6 ist noch entnehmbar, dass in zumindest einem Gleitschuh 436 Vertiefungen vorhanden sind, in denen ein als Schmiermittel dienendes Material 450 aufgenommen ist. Die Füllungen 450 können aus einem hochviskosen Medium mit Schmiereigenschaften bestehen. Es können jedoch auch poröse Füllungen, die mit Schmiermittel getränkt sind, zum Einsatz kommen. Die Füllungen 450 können auch lose in den entsprechenden Ausnehmungen bzw. Vertiefungen eines Gleitschuhes 436 aufgenommen sein, so dass sie unter Fliehkrafteinwirkung stets in Anlage mit den Flächen 441, 442 sind. Bei einer derartigen Ausgestaltung können dann auch feste Schmierstoffe, wie beispielsweise Plättchen aus Graphit, eingesetzt werden, die aufgrund ihres über die Lebensdauer des Drehschwingungsdämpfers erfolgenden Verschleißes und der dabei freigesetzten Partikel den Schmiereffekt erzeugen bzw. den zwischen den in Eingriff sich befindlichen Flächen vorhandenen Reibungskoeffizienten entsprechend reduzieren.

Die in den Figuren 5 und 6 dargestellten Konstruktionen können in einfacher Weise durch axiales Zusammenschieben der Bauteile 303 und 305 bzw. der Bauteile 403 und 405 montiert werden, wobei die Federn 319 bzw. 419 und die zugeordneten Gleitschuhe 336 bzw. 436 entweder auf dem primärseitigen Bauteil 303 bzw. 403 oder dem sekundärseitigen Bauteil 305 bzw. 405 vormontiert sein können.

Die erfindungsgemäße fliehkraftmäßige Abstützung von in Umfangsrichtung zwischen zwei relativ zueinander verdrehbaren Bauteilen wirksamen Energiespeichern kann grundsätzlich bei Drehschwingungsdämpfern, wie zum Beispiel Zweimassenschwungrädern, Kupplungsscheiben, Wandler-Überbrückungskupplungen oder bei anderen in einem Antriebsstrang vorgesehenen Torsionsschwingungsdämpfem Verwendung finden.

Die Ausführungsbeispiele sind nicht als Einschränkung der Erfindung zu verstehen. Vielmehr sind im Rahmen der vorliegenden Offenbarung zahlreiche Abänderungen und Modifikationen möglich, insbesondere solche, die durch Kombination oder Abwandlung von einzelnen in Verbindung mit den in der allgemeinen Beschreibung und der Figurenbeschreibung sowie den Ansprüchen beschriebenen und in den Zeichnungen enthaltenen Merkmalen bzw. Elementen oder Verfahrensschritten gebildet werden können.

### Bezugszeichenliste

- 1: Drehschwingungsdämpfer
- 2: Zweimassenschwungrad
- 3: Primärmasse
- 4: Schraubverbindungen
- 5: Sekundärmasse
- 6: Reibungskupplung
- 7: Kupplungsscheibe
- 8: Lagerung
- 9: axialer Ansatz
- 10: Blechformteil
- 11: ringförmiger Bereich
- 12: ringförmiger Ansatz
- 13: Anlasserzahnkranz
- 14: Wandung
- 15: Verschweißung
- 16: Zusatzträgheitsmasse
- 17: Energiespeicher
- 18: Hysterese- bzw. Reibeinrichtung
- 19: äußere Schraubenfeder
- 20: innere Schraubenfeder
- 21: ringförmige Kammer
- 22: segmentartige Kanäle
- 23: Abstütz- bzw. Beaufschlagungsbereiche
- 24: flanschartiges Bauteil
- 25: äußerer, ringförmiger Bereich
- 26: innerer, ringförmiger Bereich
- 27: gebogene Fenster
- 28, 29: Abstütz- bzw. Beaufschlagungsbereiche
- 30,31: Blechformteile
- 32, 33: radial innere Bereiche
- 34: ringförmige Masse
- 35: Nietverbindungen
- 36, 37: Abstützelemente
- 38,39: Federwindung
- 40,41,42: sich in Umfangsrichtung erstreckende Flächen
- 43: radial hervorstehender Bereich
- 44: gehärtetes Blechband
- 45, 46: ringförmige, axiale Vorsprünge
- 101: Drehschwingungsdämpfer
- 103: Primärmasse
- 105: Sekundärmasse
- 112: axialer Ansatz
- 117: Energiespeicher
- 119: Schraubenfeder
- 121: ringförmige Kammer
- 130: scheibenförmiges Bauteil
- 135: Nietverbindungen
- 136: Abstützelement
- 141: Abstütz- bzw. Gleitfläche
- 145: ringförmiger, axialer Ansatz
- 147: Verstärkungsbauteil
- 148: Kunststoffummantelung, Gleitschuhe
- 149: Schlitz
- 201: Drehschwingungsdämpfer
- 207: Kupplungsscheibe
- 210,211: scheibenförmige Bauteile
- 214: scheibenförmige Bauteile
- 217: Energiespeicher
- 219: Schraubenfedern
- 230, 234: Sekundärmasse (scheibenförmges Bauteil)
- 236: Gleitschuh
- 241a, 241b: Teilgleitflächen
- 242a, 242b: Teilgleitflächen
- 244: bogenartig ausgebildete Einlage
- 250, 251, 252: Aufnahmen
- 253: separates Bauteil
- 301: Drehschwingungsdämpfer
- 303: Primärteil
- 305: Sekundärteil
- 308: Gleitlagerung
- 317: Energiespeicher
- 319: Schraubenfeder
- 323, 329: Beaufschlagungsbereiche
- 336: Gleitschuhe
- 341, 342: Abstütz- bzw. Fleitflächen
- 353: Bauteil
- 403: Primärteil
- 405: Sekundärteil
- 419: Feder
- 436: Gleitschuhe
- 441, 442: Gleitflächen
- 450: Schmiermittel, Füllungen

## Patentansprüche

1. Drehschwingungsdämpfer mit wenigstens einem ersten Teil und einem gegenüber diesem entgegen der Wirkung von zumindest einem sich tangential oder in Umfangsrichtung erstreckenden Energiespeicher verdrehbaren zweiten Teil, wobei die beiden Teile wenigstens eine Aufnahme für den Energiespeicher definieren und jeweils Beaufschlagungsbereiche besitzen, zwischen denen der Energiespeicher bei einer Relatiwerdrehung der beiden Teile komprimierbar ist, wobei weiterhin der Energiespeicher - über seine Längserstreckung betrachtet - mittels zumindest zwischen den Endbereichen des Energiespeichers vorgesehenen Abstützelementen fliehkraftmäßig abgestützt ist, **dadurch gekennzeichnet, dass** die fliehkraftmäßige Abstützung mittels der Abstützelemente sowohl am ersten als auch am zweiten Teil erfolgt.

2. Drehschwingungsdämpfer nach Anspruch 1, **dadurch gekennzeichnet, dass** wenigstens ein Abstützelement an beiden Teilen radial abgestützt ist.

3. Drehschwingungsdämpfer nach Anspruch 1, **dadurch gekennzeichnet, dass** wenigstens zwei - über die Längserstreckung des Energiespeichers betrachtet - voneinander beabstandete Abstützelemente vorhanden sind, von denen sich das eine nur an dem einen Teil und das andere nur an dem anderen Teil radial abstützt.

4. Drehschwingungsdämpfer nach einem der Ansprüche 1 bis 3, **dadurch gekennzeichnet, dass** der Energiespeicher durch eine Schraubenfeder gebildet ist, die ein Längen-/Außendurchmesser-Verhältnis besitzt von wenigstens 6.

5. Drehschwingungsdämpfer nach einem der Ansprüche 1 bis 4, **dadurch gekennzeichnet, dass** der Energiespeicher zumindest durch zwei in Reihe hintereinander angeordnete Schraubenfedern gebildet ist.

6. Drehschwingungsdämpfer nach einem der Ansprüche 1 bis 5, **dadurch gekennzeichnet, dass** ein Abstützelement wenigstens eine Windung einer Schraubenfeder radial abstützt.

7. Drehschwingungsdämpfer nach einem der Ansprüche 1 bis 6, **dadurch gekennzeichnet, dass** wenigstens ein Abstützelement zwischen zwei in Reihe hintereinander angeordneten Schraubenfedern vorgesehen ist.

8. Drehschwingungsdämpfer nach einem der Ansprüche 1 bis 7, **dadurch gekennzeichnet, dass** die Abstützelemente zumindest in Umfangsrichtung eine Antriebsverbindung mit wenigstens einer Federwindung aufweisen.

9. Drehschwingungsdämpfer nach wenigstens einem der Ansprüche 1 bis 8, **dadurch gekennzeichnet, dass** der wenigstens eine Energiespeicher in einer Aufnahme geführt ist, die von Bereichen beider Teile gebildet ist, wobei beide Teile jeweils zumindest einen sich wenigstens über einen Teilbereich der Längenerstreckung des Energiespeichers in Umfangsrichtung erstreckenden Wandungsbereich aufweisen, der axial zumindest Bereiche eines Abstützelementes übergreift, wobei der Energiespeicher radial nach außen hin über Abstützelemente abstützbar ist, die beim Komprimieren des Energiespeichers jeweils entlang wenigstens eines der Wandungsbereiche verlagerbar sind.

10. Drehschwingungsdämpfer nach einem der Ansprüche 1 bis 9, **dadurch gekennzeichnet, dass** die Abstützelemente durch Gleitschuhe gebildet sind.

11. Drehschwingungsdämpfer nach einem der Ansprüche 1 bis 9, **dadurch gekennzeichnet, dass** sich die Abstützelemente unter Zwischenlegung von Abwälzkörpem an einem Wandungsbereich radial abstützen.

12. Drehschwingungsdämpfer nach einem der Ansprüche 1 bis 11, **dadurch gekennzeichnet, dass** eine Mehrzahl von Abstützelementen über die Längserstreckung des Energiespeichers verteilt vorgesehen ist, die sich alternierend am ersten Teil und am zweiten Teil abstützen.

13. Drehschwingungsdämpfer nach einem der Ansprüche 1 bis 11, **dadurch gekennzeichnet, dass** über die Längserstreckung des Energiespeichers eine Mehrzahl von Abstützelementen vorgesehen ist, die sich jeweils gruppenweise alternierend am ersten und am zweiten Teil abstützen.

14. Drehschwingungsdämpfer nach einem der Ansprüche 1 bis 13, **dadurch gekennzeichnet, dass** der Energiespeicher in einer bogenförmig verlaufenden Aufnahme geführt ist, die zumindest radial nach außen hin von sich in Umfangsrichtung erstreckenden Wandungsbereichen sowohl des ersten Teils als auch des zweiten Teils begrenzt ist.

## Claims

1. Torsional vibration damper with at least one first part and one second part rotatable with respect to the latter counter to the action of at least one energy accumulator extending tangentially or in the circumferential direction, the two parts defining at least one receptacle for the energy accumulator and possessing in each case action-taking regions, between which the energy accumulator can be compressed during a relative rotation of the two parts, furthermore, the energy accumulator, as seen over its longitudinal extent, being supported centrifugally by means of supporting elements provided at least between the end regions of the energy accumulator, **characterized in that** the centrifugal support by means of the supporting elements takes place both on the first and on the second part.

2. Torsional vibration damper according to Claim 1, **characterized in that** at least one supporting element is supported radially on both parts.

3. Torsional vibration damper according to Claim 1, **characterized in that** at least two supporting elements are present, which are spaced apart from one another, as seen over the longitudinal extent of the energy accumulator, and of which one is supported radially only on one part and the other is supported radially only on the other part.

4. Torsional vibration damper according to one of Claims 1 to 3, **characterized in that** the energy accumulator is formed by a helical spring which possesses a length/outside-diameter ratio of at least 6.

5. Torsional vibration damper according to one of Claims 1 to 4, **characterized in that** the energy accumulator is formed at least by two helical springs arranged one behind the other in series.

6. Torsional vibration damper according to one of Claims 1 to 5, **characterized in that** one supporting element supports at least one turn of a helical spring radially.

7. Torsional vibration damper according to one of Claims 1 to 6, **characterized in that** at least one supporting element is provided between two helical springs arranged one behind the other in series.

8. Torsional vibration damper according to one of Claims 1 to 7, **characterized in that** the supporting elements have, at least in the circumferential direction, a drive connection to at least one spring turn.

9. Torsional vibration damper according to at least one of Claims 1 to 8, **characterized in that** the at least one energy accumulator is guided in a receptacle which is formed by regions of the two parts, the two parts having in each case at least one wall region which extends in the circumferential direction at least over a part-region of the longitudinal extent of the energy accumulator and which engages axially at least over regions of a supporting element, the energy accumulator being supportable radially outwards via supporting elements which, when the energy accumulator is compressed, are in each case displaceable along at least one of the wall regions.

10. Torsional vibration damper according to one of Claims 1 to 9, **characterized in that** the supporting elements are formed by sliding shoes.

11. Torsional vibration damper according to one of Claims 1 to 9, **characterized in that** the supporting elements are supported radially on a wall region, with rolling bodies being interposed.

12. Torsional vibration damper according to one of Claims 1 to 11, **characterized in that** a plurality of supporting elements are provided, distributed over the longitudinal extent of the energy accumulator, and are supported alternately on the first part and on the second part.

13. Torsional vibration damper according to one of Claims 1 to 11, **characterized in that** a plurality of supporting elements are provided over the longitudinal extent of the energy accumulator and are in each case supported in groups alternately on the first and on the second part.

14. Torsional vibration damper according to one of Claims 1 to 13, **characterized in that** the energy accumulator is guided in an arcuately running receptacle which is delimited at least radially outwards by wall regions, extending in the circumferential direction, both of the first part and of the second part.

## Revendications

1. Amortisseur de vibrations de torsion, avec au moins une première partie et une deuxième partie pouvant tourner par rapport à celle-ci à l'encontre de l'action d'au moins un accumulateur d'énergie s'étendant tangentiellement ou en direction périphérique, dans lequel les deux parties définissent au moins un logement pour l'accumulateur d'énergie et possèdent chacune des zones de sollicitation, entre lesquelles l'accumulateur d'énergie peut être comprimé lors d'une rotation relative des deux parties, dans lequel en outre l'accumulateur d'énergie - considéré suivant son extension longitudinale - est supporté par rapport à la force centrifuge au moyen au moins d'éléments d'appui prévus entre les zones d'extrémité de l'accumulateur d'énergie, **caractérisé en ce que** le support par rapport à la force centrifuge est réalisé au moyen des éléments d'appui aussi bien sur la première que sur la deuxième partie.

2. Amortisseur de vibrations de torsion selon la revendication 1, **caractérisé en ce qu'**au moins un élément d'appui est supporté radialement sur les deux parties.

3. Amortisseur de vibrations de torsion selon la revendication 1, **caractérisé en ce qu'**il y a au moins deux éléments d'appui espacés l'un de l'autre - considérés suivant l'extension longitudinale de l'accumulateur d'énergie - dont l'un ne s'appuie radialement que sur une partie et dont l'autre ne s'appuie radialement que sur l'autre partie.

4. Amortisseur de vibrations de torsion selon l'une quelconque des revendications 1 à 3, **caractérisé en ce que** l'accumulateur d'énergie est formé par un ressort hélicoïdal, qui présente un rapport longueur/diamètre extérieur d'au moins 6.

5. Amortisseur de vibrations de torsion selon l'une quelconque des revendications 1 à 4, **caractérisé en ce que** l'accumulateur d'énergie est formé par au moins deux ressorts hélicoïdaux disposés en série l'un derrière l'autre.

6. Amortisseur de vibrations de torsion selon l'une quelconque des revendications 1 à 5, **caractérisé en ce qu'**un élément d'appui supporte radialement au moins une spire d'un ressort hélicoïdal.

7. Amortisseur de vibrations de torsion selon l'une quelconque des revendications 1 à 6, **caractérisé en ce qu'**il est prévu au moins un élément d'appui entre deux ressorts hélicoïdaux disposés en série l'un derrière l'autre.

8. Amortisseur de vibrations de torsion selon l'une quelconque des revendications 1 à 7, **caractérisé en ce que** les éléments d'appui présentent au moins en direction périphérique une liaison d'entraînement avec au moins une spire de ressort.

9. Amortisseur de vibrations de torsion selon l'une quelconque des revendications 1 à 8, **caractérisé en ce que** l'au moins un accumulateur d'énergie est guidé dans un logement, qui est formé par des zones des deux parties, dans lequel les deux parties présentent chaque au moins une zone de paroi s'étendant en direction périphérique sur au moins une zone partielle de l'extension longitudinale de l'accumulateur d'énergie, dans lequel l'accumulateur d'énergie peut s'appuyer radialement vers l'extérieur au moyen d'éléments d'appui, qui peuvent se déplacer chaque fois le long d'au moins une des zones de paroi lors d'une compression de l'accumulateur d'énergie.

10. Amortisseur de vibrations de torsion selon l'une quelconque des revendications 1 à 9, **caractérisé en ce que** les éléments d'appui sont formés par des patins de glissement.

11. Amortisseur de vibrations de torsion selon l'une quelconque des revendications 1 à 9, **caractérisé en ce que** les éléments d'appui s'appuient radialement sur une zone de paroi avec interposition de corps de roulement.

12. Amortisseur de vibrations de torsion selon l'une quelconque des revendications 1 à 11, **caractérisé en ce qu'**il est prévu une multiplicité d'éléments d'appui répartis sur l'extension longitudinale de l'accumulateur d'énergie, qui s'appuient en alternance sur la première partie et sur la deuxième partie.

13. Amortisseur de vibrations de torsion selon l'une quelconque des revendications 1 à 11, **caractérisé en ce qu'**il est prévu une multiplicité d'éléments d'appui sur l'extension longitudinale de l'accumulateur d'énergie, qui s'appuient chaque fois par groupes en alternance sur la première partie et sur la deuxième partie.

14. Amortisseur de vibrations de torsion selon l'une quelconque des revendications 1 à 13, **caractérisé en ce que** l'accumulateur d'énergie est guidé dans un logement en forme d'arc, qui est délimité au moins radialement vers l'extérieur par des zones de paroi s'étendant en direction périphérique aussi bien de la première partie que de la deuxième partie.
